**Europäisches Patentamt**

**European Patent Office**

**Office européen des brevets**

(19)

(11) Publication number: **0 109 821**
**A1**

(12) # EUROPEAN PATENT APPLICATION

(21) Application number: **83306966.9**

(22) Date of filing: **15.11.83**

(51) Int. Cl.³: **G 05 D 3/00**
**F 16 K 31/05**

(30) Priority: **17.11.82 GB 8232792**

(43) Date of publication of application:
**30.05.84 Bulletin 84/22**

(84) Designated Contracting States:
**DE FR IT SE**

(71) Applicant: **Portescap (U.K.) Limited**
**204 Elgar Road**
**Reading Berkshire RG2 0DD(GB)**

(72) Inventor: **Andrew, Rodger John**
**49 Hayes Lane**
**Wimbourne Dorset BH21 2JB(GB)**

(72) Inventor: **Burton, Anthony John**
**41 Bearcroft**
**Weobley Hereford HRF4 8TA(GB)**

(74) Representative: **Sheader, Brian N. et al,**
**ERIC POTTER & CLARKSON 5 Market Way Broad Street**
**Reading Berkshire, RG1 2BN(GB)**

(54) Actuator for a spring-biased member.

(57) An actuator suitable for actuating the spool of a spring-centred spool valve comprises an ironless rotor DC electric motor (1) connected by a gear train (10) to a pivoted toothed quadrant (2) which drives the spool by means of a connecting rod (8). The spool can be returned to a neutral or "fail-safe" position by the action of its centering springs in the event of an interruption in the electrical supply to the actuator, the now de-energised motor being capable of being back-driven by the springs. A manual control in circuit with the electric motor and a feedback potentiometer (11) linked to the toothed quadrant may comprise a control potentiometer with which the feedback potentiometer is balanced to control the actuator.

./...

Fig.1.

1

## ACTUATOR FOR A SPRING-BIASED MEMBER

This invention relates to actuators for spring-biased members and particularly, although not exclusively, for a spring-centred spool of a spool valve.

The invention has as its object to provide an actuator which is particularly suitable for actuating the spool of a spring-centred spool valve and which is capable of being driven by the energy stored in the centering springs of the spool of the spool valve to enable the spool to return to a neutral or "fail-safe" position in the event of an interruption in the electrical supply to the actuator.

The present invention provides an actuator for a spring-biased member, the actuator comprising an ironless rotor DC electric motor, a toothed quadrant mounted for angular movement about a pivot axis and having means whereby it can be connected to a said member to impart linear motion thereto, a gear train for transmitting drive from the electric motor to the toothed quadrant, and a feedback potentiometer so connected to the toothed quadrant at the pivot axis thereof that changes in resistance of the potentiometer will be indicative of the angular position of the toothed quadrant and hence of the position of a said member.

Preferably, the actuator is controllable by a suitable manual control, such as a joystick, through a suitable electric circuit which includes the said electric motor, the said feedback potentiometer and the manual control. According to a preferred embodiment the manual control comprises a control potentiometer the output voltage of which will change with movement of the manual control and the electrical circuit is such than when a change occurs in the relationship between the output voltage of the control potentiometer and the output voltage of the feedback potentiometer due to actuation of the manual control the motor will be energised to drive the toothed quadrant angularly in the appropriate direction until the said relationship has been restored, thus ensuring that actuation of the manual control will produce a corresponding actuation of the actuator.

In order to be sure that the actuator can be back driven by the energy stored in the biasing spring or springs of the member being actuated it is necessary to ensure that the electric motor is deenergised. So that the actuator will "fail-safe", the said manual control may include a normally open switch which has to be manually held in a closed position in order to enable the electric motor to be energised or the manual control may be biased

3

to a neutral position and may include switch means which will be open when the manual control is in its neutral position.

In order to provide sufficient torque to overcome mechanical stiction and inertia without overheating of the electric motor the electric circuit may be such as to provide a pulsed DC electric current having maximum and minimum levels which are so timed as to prevent overheating of the electric motor under normal conditions and the maximum level of which is such as to provide sufficient torque from the electric motor as to overcome mechanical stiction and inertia in the actuator and a member being driven thereby.

The invention will be more particularly described with reference to the accompanying drawings, in which:-

Figure 1 is a plan view of an actuator according to the present invention with a top cover plate removed so as to show the interior thereof,

Figure 2 is a section on the line A-A of Figure 1,

Figure 3 is a schematic of the actuator of the present invention and the control means therefor,

Figure 4 is a circuit diagram of a control circuit for the actuator of Figures 1 and 2, and

Figure 5 shows a modification of the circuit of Figure 4.

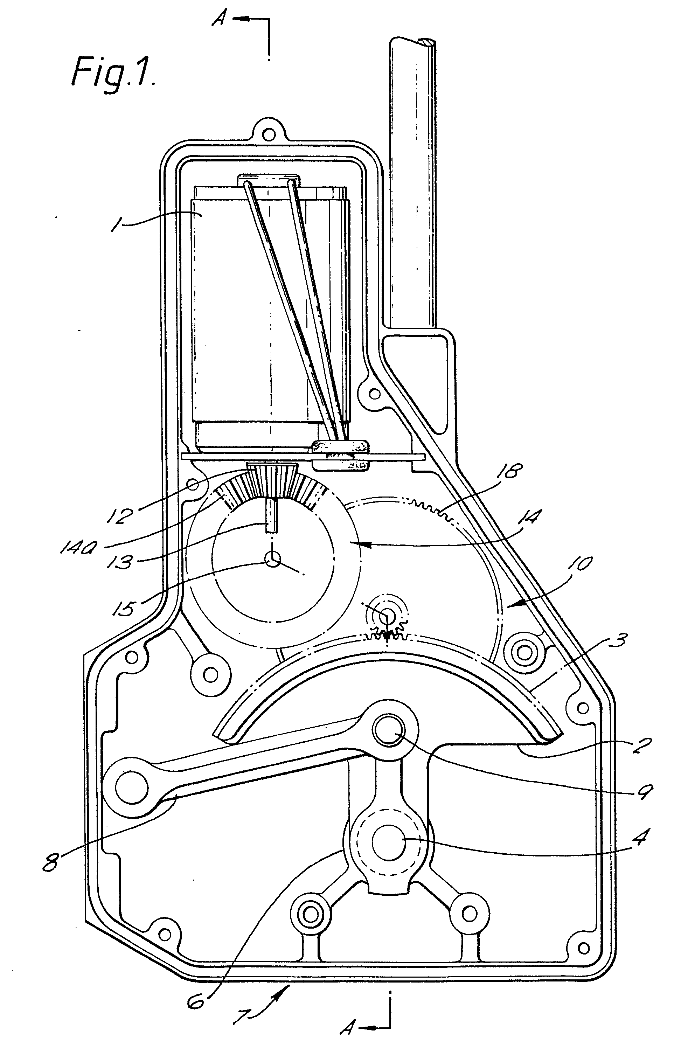

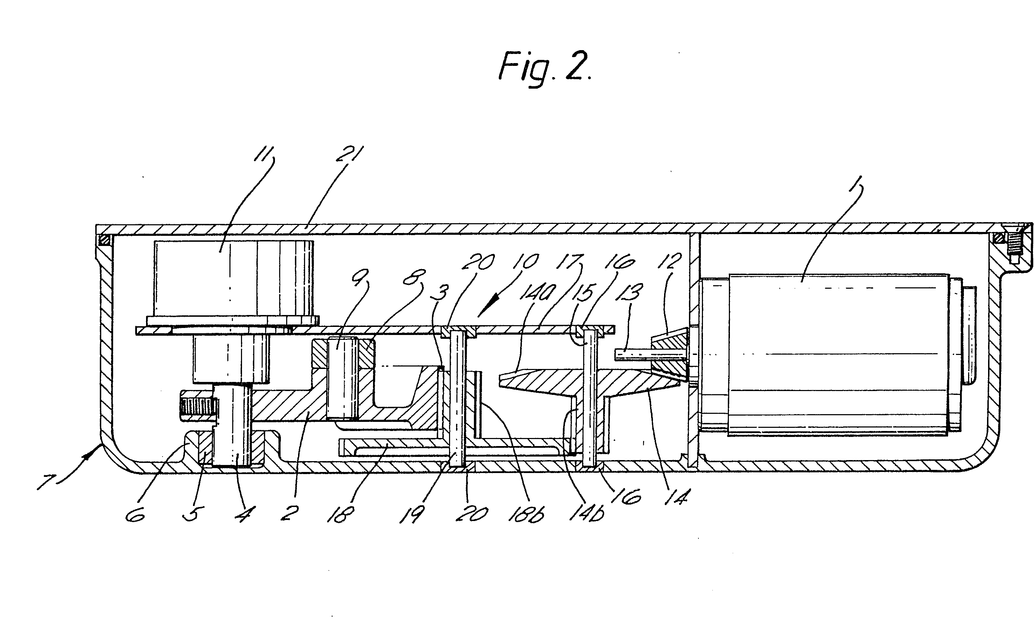

Referring to Figures 1 and 2 it will be seen that the actuator illustrated therein comprises an ironless rotor DC electric motor 1, a quadrant 2 having teeth 3,

4

the toothed quadrant 2 being mounted for angular movement on a pivot pin 4 rotatably mounted in a bearing 5 secured in a boss 6 of a housing 7, a connecting rod 8 one end of which is connected to the toothed quadrant 2 by means of a pivot pin 9 and the other end of which is connectable to a spring-biased member so as to impart linear motion thereto, a gear train 10 for transmitting drive from the electric motor 1 to the toothed quadrant 2, and a feedback potentiometer 11 the wiper of which is connected to the pivot pin 4 on which the toothed quadrant 2 is fixedly secured so that the output voltage of the potentiometer will be indicative of the angular position of the toothed quadrant.

The gear train 10 comprises a bevel gear 12 mounted on the spindle 13 of the electric motor 1 so as to be driven thereby, a gear wheel 14 rotatable with a shaft 15 mounted in bearings 16 in the housing 7 and in a plate 17 securely mounted within the housing 7, the gear wheel 14 having a bevel gear portion 14a meshing with the bevel gear 12 and a spur gear portion 14b meshing with a gear wheel 18 having a gear portion 18b in meshing engagement with the toothed quadrant 2. The gear wheel 18 is rotatable with a shaft 19 mounted in bearings 20 in the housing 7 and plate 17.

The housing 7 is closed by a removable cover plate 21 and has an aperture (not shown) therein through which the connecting rod 8 can be connected to a member to be actuated.

5

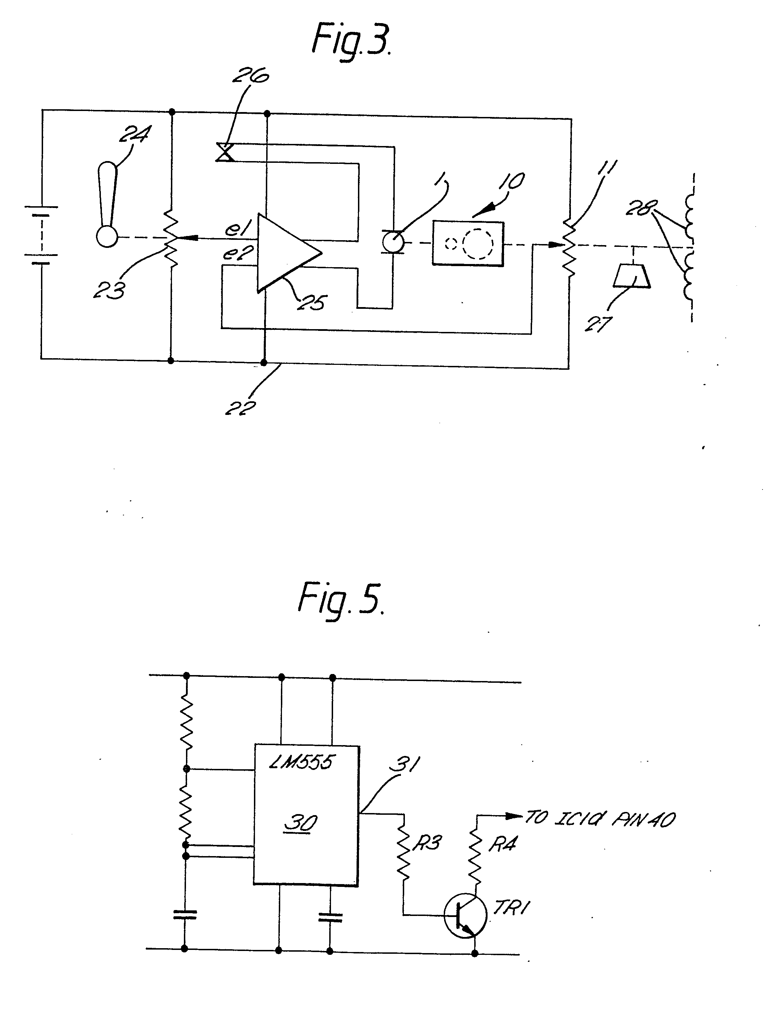

Referring now to Figure 3, in which like parts have been given like reference numerals, it will be seen that the electric motor 1 and the feedback potentiometer 11 are connected into an electric control circuit which includes a control potentiometer 23 which is manually controllable by a manual control 24, such as a joystick. An amplifier circuit 25 is arranged to produce an electrical output proportional to the algebraic difference between the voltages el and e2 derived respectively from the potentiometers 23 and 11. The electric circuit also includes a normally open switch 26 which is adapted to be closed either manually or by movement of the manual control 24 from a neutral position to which it is biased to return whenever it is not being manually moved therefrom. The electric motor 1 is mechanically connected by way of the gear train 10 and connecting rod 8 to a member 27, e.g., the spool of a spool valve, which is normally biased to a neutral position by centering springs 28. When it is desired to move the member 27 from its neutral position against the bias of the springs 28 the switch 26 is closed and the manual control 24 operated to bring about a change in the resistance of the control potentiometer 23. As a result the electric motor 1 will be energised and will be driven in the appropriate direction through the amplifier circuit 25 until the relationship between the output voltage of the control potentiometer 23 and the output voltage of the feedback potentiometer 11 has been restored. Thus actuation of the manual control 24 will be translated into corresponding actuation

6

of the member 27. When the electric motor 1 is deenergised by opening of the switch 26, the member 27 and the actuator will be back driven and returned to their original condition by the energy stored in the centering springs 28. To this end it is necessary that the electric motor 1 have very low friction, non-cogging and low inertia characteristics and that the gear train 10 be of high efficiency. It is for this reason that the actuator of the present invention utilises an ironless rotor DC electric motor, e.g., of the kind manufactured by the Applicants and sold under the trade mark "Escap" type 26L 28-216-164.

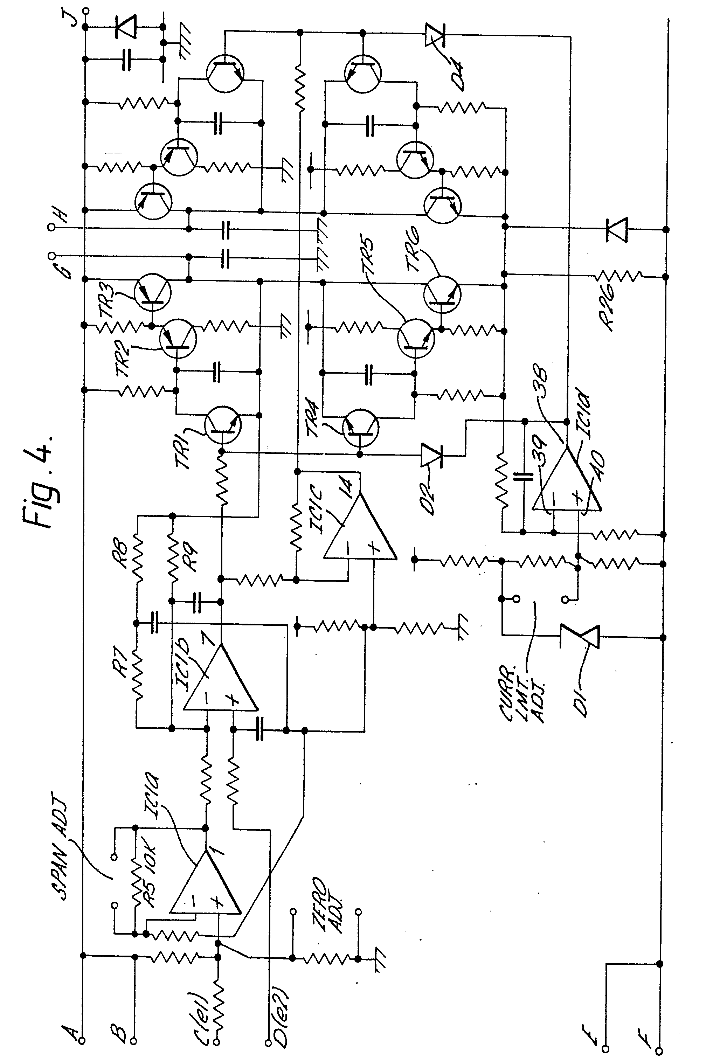

Figure 4 illustrates a suitable servo amplifier circuit for an arrangement such as is shown in Figure 3.

In the circuit of Figure 4, the voltage e1, which defines the desired position of the member 27 of Figure 3, is applied to terminal C whilst the voltage e2, which defines the actual position of the member 27, is applied to terminal D. An amplifier ICIa is arranged so that its gain can be adjusted "on test" by fitting a suitable resistor across terminals "SPAN ADJ", thus allowing factory adjustment of the angular proportionality of movement of the member 27 to movement of the manual control 24. Similarly, the fitting of a suitable resistor across terminals "ZERO ADJ" allows adjustment of the neutral position of the manual control 24 to the neutral position of the member 27.

The electric motor 1 is connected across terminals G and H.

An amplifier ICIb in conjunction with transistors TR1 to TR6 provides a difference amplifier with feed back via resistors R7 to R9 from the motor output terminal G. Thus terminal G assumes a voltage substantially equal to one half the supply voltage at terminal J when e2 is equal to e1. The voltage at terminal H is constrained by amplifier ICIc to be substantially equal to one half the supply voltage under these conditions and thus the voltage between terminals G and H is substantially the same.

The voltage at terminal G will differ from one half the supply voltage by an amount proportional to e2 - e1. Similarly the voltage at terminal H will differ from one half the supply voltage by an amount proportional to e1 - e2. Thus the voltage supplied to the motor at terminals G and H is proportional to e2 - e1.

The output current, whatever the polarity of terminal G with respect to terminal H, flows through resistor R26 to give a proportional voltage at terminal 39 of amplifier ICId. Terminal 40 of amplifier ICId is supplied with a stable voltage derived from nominally zero temperature coefficient zener D1. So long as terminal 39 of ICId is negative with respect to terminal 40, terminal 38 is high and diodes D2, D4 not conducting. Should output current rise to a level at which terminal 39 of ICId becomes positive with respect to terminal 40, terminal 38 goes low and current through diodes D2, D4 forces output terminals G and H both low. Thus current to the electric motor 1 is limited. The current limit is adjustable by placing a suitable resistor across terminals "CURR LMT ADJ".

Figure 5 shows circuitry which can be added to the circuit of Figure 4 to provide a pulsed DC current to the electric motor 1. The additional circuitry of Figure 5 comprises a LM555 timer 30 which is connected as a pulse generator. The configuration has the property that terminal 31 of the timer 30 oscillates repetitively between high and low levels. The collector of transistor TR1 (Figure 5) is connected to terminal 40 of amplifier ICId (Figure 4). Thus terminal 31 of timer 30 which is coupled through resistor R3 to the base of transistor TR1 causes resistor R4 to shunt terminal 40 of amplifier ICId substantially to zero volts repetitively. In this manner the upper current limit is permitted for only a predetermined period of time, e.g., for approximately 33 milliseconds only. For the remainder of the time the current is maintained at a lower level, the upper and lower current levels and the time for which the upper level is held being so chosen as to prevent overheating of the electric motor 1 whilst providing sufficient torque from the electric motor 1 at the higher current level to overcome mechanical stiction and inertia in the actuator and the member to be actuated thereby.

## Claims

1.    An actuator for a spring-biased member characterised in that,the actuator comprises an ironless rotor DC electric motor (1), a toothed quadrant (2) mounted for angular movement about a pivot axis and having means whereby it can be connected to a said member (27) to impart linear motion thereto, a gear train (10) for transmitting drive from the electric motor to the toothed quadrant, and a feedback potentiometer (11) so connected to the toothed quadrant at the pivot axis thereof that changes in resistance of the potentiometer will be indicative of the angular position of the toothed quadrant and hence of the position of a said member.

2.    An actuator according to claim 2, characterised in that it further comprises an electrical control circuit including the said electric motor (1), the said feedback potentiometer (11) and a manual control (24).

3.    An actuator according to claim 2, characterised in that the manual control is a joystick (24).

4.    An actuator according to claim 2 or claim 3, characterised in that the manual control comprises a control potentiometer (23) the output voltage of which will change with movement of the manual control and the electrical circuit is such that when a change occurs in the relationship between the output voltage of the control potentiometer and the output voltage of the feedback potentiometer (11)  due to actuation of the manual control the motor (1) will be energised to drive the toothed quadrant (2) angularly in the appropriate direction until the said relationship has been restored.

5. An actuator according to any one of claims 2 to 4, characterised in that it further includes means (26) for de-energising the electric motor to enable the spring-biased member (27) to back-drive the motor (1) on releasing the manual control.

6. An actuator according to claim 5, characterised in that the manual control (24) includes a normally open switch (26) which has to be manually held in a closed position in order to enable the electric motor (1) to be energised.

7. An actuator according to claim 5, characterised in that the manual control (24) is biased to a neutral position and includes switch means (26) which is open when the manual control is in its neutral position.

8. An actuator according to any one of the preceding claims characterised in that the electric motor (1) is controlled by an electrical circuit adapted to provide a pulsed DC electric current having maximum and minimum levels which are so timed as to prevent overheating of the electric motor under normal conditions and the maximum level of which is such as to provide sufficient torque from the electric motor as to overcome mechanical stiction and inertia in the actuator and a member being driven thereby.

9. A spring centred spool valve (27) wherein the spool is provided with an actuator according to any one of the preceding claims.

Fig.1.

A

Fig. 2.

0109821-

3/4

# Fig.3.

# Fig.5.

Fig. 4.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 085 129 (KONTAK MANUFACTURING) <br> * Page 1, lines 26-120; figures 1-3 * | 1-5,9 | G 05 D 3/00 <br> F 16 K 31/05 |
| | --- | | |
| A | CH-A- 293 759 (RHEOSTATIC COMPANY) <br> * Page 1, lines 1-11; page 2, lines 47-53; figure 1 * | 6 | |
| | --- | | |
| A | FR-A-1 558 775 (BADISCHE ANILIN) <br> * Page 2, right-hand column, line 36 - page 3, left-hand column, line 28; figure 2 * | 8 | |
| | ----- | | |
| | | | TECHNICAL FIELDS SEARCHED (Int. Cl. ³) |
| | | | G 05 D <br> F 16 K |

The present search report has been drawn up for all claims

| Place of search | Date of completion of the search | Examiner |
|---|---|---|
| THE HAGUE | 06-02-1984 | HELOT H.V. |